# NEUE EUROPÄISCHE PATENTSCHRIFT

(11) **EP 2 764 234 B2**
(45) Veröffentlichungstag und Bekanntmachung des Hinweises auf die Entscheidung über den Einspruch: **14.04.2021**
(45) Hinweis auf die Patenterteilung: 17.05.2017
(21) Anmeldenummer: 12743378.7
(22) Anmeldetag: 25.07.2012
(51) Int. Cl.: F03B 3/06, F03B 3/14, F03B 3/18, F03B 15/08, F03B 15/16

(54) **VERFAHREN ZUR PRIMÄRREGELUNG EINES WASSERKRAFTWERKS**
METHOD FOR PRIMARY ADJUSTMENT OF A HYDROELECTRIC POWER PLANT
PROCÉDÉ DE RÉGULATION PRIMAIRE D'UNE CENTRALE HYDROÉLECTRIQUE

(30) Priorität: 07.10.2011 DE 102011115034
(43) Veröffentlichungstag der Anmeldung: 13.08.2014
(73) Patentinhaber: Voith Patent GmbH, 89522 Heidenheim (DE)
(72) Erfinder: BRAUSEWETTER, Sven, 89233 Neu-Ulm (DE); KÄCHELE, Thomas, 89522 Heidenheim (DE); KERLER, Wolfgang, 89522 Heidenheim (DE); STUMMER, Manfred, 89520 Heidenheim (DE)
(74) Vertreter: Voith Patent GmbH - Patentabteilung
(86) Internationale Anmeldenummer: PCT/EP2012/003127
(87) Internationale Veröffentlichungsnummer: WO 2013/050091

(56) Entgegenhaltungen:
- CH-A- 235 106
- GB-A- 1 227 368
- US-A- 3 140 854

## Beschreibung

Die Erfindung betrifft ein Verfahren zur Primärregelung eines Wasserkraftwerks nach der im Oberbegriff von Anspruch 1 näher definierten Art.

Wasserkraftwerke sind aus dem allgemeinen Stand der Technik bekannt. Sie nutzen einen Höhenunterschied zwischen einem sogenannten Oberwasser und einem sogenannten Unterwasser, um das Wasser beim Strömen vom Oberwasser zum Unterwasser durch eine Turbine zu leiten. Der aus der Höhendifferenz stammende Druckunterschied wird dabei in mechanische Energie im Bereich der Turbine umgewandelt. Die Turbine treibt dann einen Generator an, welcher die mechanische Energie in elektrische Energie wandelt, um diese für elektrische Verbraucher zur Verfügung zu stellen. Typischerweise werden Wasserkraftwerke dabei so eingesetzt, dass die im Bereich der Wasserkraftwerke erzeugte elektrische Leistung einem elektrischen Energieversorgungsnetz zur Verfügung gestellt wird. Nun ist es so, dass elektrische Energieversorgungsnetze typischerweise eine vorgegebene Netzfrequenz aufweisen. Um die Funktionalität des Netzes zu gewährleisten ist es wichtig, diese Netzfrequenz in gewissen vorgegebenen Grenzen zu halten. Dafür wird die eingespeiste elektrische Leistung so geregelt, dass diese zur Unterstützung einer stabilen Netzfrequenz beiträgt. In der Kraftwerkstechnik wird dies als Primärregelung bezeichnet.

Die Primärregelung im Bereich eines Wasserkraftwerks erfolgt nun typischerweise so, dass Stellglieder zur Beeinflussung der elektrischen Leistung an der Turbine in Abhängigkeit eines Ist-Werts der Netzfrequenz zur Beeinflussung der Turbinenleistung nachgestellt werden, um einen Zielwert der Netzfrequenz zu erreichen. Diese Vorgehensweise ist aus dem allgemeinen Stand der Technik bekannt. Sie erfordert Turbinen mit entsprechenden Stellgliedern, welche mit einer vergleichsweise großen Anzahl von Stellbewegungen je Zeiteinheit nachgestellt werden können, um die Anforderungen der Primärregelung an die Turbine erfüllen zu können.

Die Nutzung von Stellgliedern im Bereich von Wasserturbinen ist bei sogenannten doppeltgeregelten Turbinen besonders effizient und exakt möglich. Solche Turbinen können beispielsweise eine Peltonturbine beziehungsweise Freistrahlturbine sein, bei welcher als ein Stellglied ein sogenannter Ablenker vorhanden ist, welcher den Freistrahl zur Turbine zumindest teilweise ablenkt, um die Leistung zu beeinflussen, und andererseits als zweites Stellglied eine Düsennadel vorhanden ist, welche den Strömungsquerschnitt des Freistrahls entsprechend beeinflusst. Ein weiteres sehr gängiges Beispiel für eine doppeltgeregelte Turbine ist insbesondere eine Kaplanturbine, welche als erste Stellglieder über verstellbare Turbinenschaufeln beziehungsweise -flügel verfügt, und welche als zweites Stellglied typischerweise über einen Leitapparat mit Leitschaufeln verfügt. Im Normalfall sind die Stellbewegungen der Turbinenschaufeln und der Leitschaufeln dabei über den sogenannten "Optimalzusammenhang" gekoppelt. Dies gewährleistet, dass die Einstellungen der beiden Stellglieder zueinander immer nur so erfolgen können, dass der optimale Wirkungsgrad der Kaplanturbine erzielt wird. Der sogenannte Optimalzusammenhang stellt also eine wirkungsgradoptimierte Zwangskopplung der Stellbewegungen der ersten und der zweiten Stellglieder dar.

Aus der CH 235 106 A ist ein Verfahren zur Drehzahlregelung von Wasserturbinenanlagen bekannt, bei welchem eine Grobeinstellung und davon unabhängig über weitere Einrichtungen eine Feineinstellung der Drehzahl funktioniert. Das Verfahren ist dabei über mechanische Stellglieder für eine Peltonturbine beschrieben. Für andersartige Turbinen, wie beispielsweise Kaplanturbinen, ist eine Regelung über den Generator vorgeschlagen.

Ferner ist in der GB 1 227 368 A eine Drehzahlregelung beschrieben. Die Drehzahlregelung erfolgt hier über eine Kombination aus Elektronik und Fliehkraftregler.

Die Aufgabe der hier vorliegenden Erfindung besteht nun darin, beim Einsatz einer doppeltgeregelten Turbine zur Primärregelung in einem Wasserkraftwerk bei hoher Regelungsgenauigkeit eine hohe Lebensdauer der Lagerung und der mechanischen Stellglieder der Anlage zu realisieren.

Erfindungsgemäß wird diese Aufgabe durch die im kennzeichnenden Teil von Anspruch 1 genannten Merkmale gelöst. Weitere vorteilhafte Ausgestaltungen des erfindungsgemäßen Verfahrens ergeben sich aus den hiervon abhängigen Unteransprüchen.

Das erfindungsgemäße Verfahren sieht es vor, dass die Laufradschaufeln einer Kaplanturbine als die ersten Stellglieder nur in definiert vorgegebenen Stellschritten verfahren werden, und dass eine Regelung auf den Zielwert der Netzfrequenz durch Nachführen der Leitschaufeln eines Leitapparats als die zweiten Stellglieder erfolgt.

Die Erfindung beruht vor allem darauf, dass die ersten Stellglieder lediglich in vorgegebenen Schrittweiten verfahren werden. Diese Schrittweiten liegen dabei gemäß einer vorzugsweisen Weiterbildung bei mehr als 0,25 % des gesamten Stellwegs der ersten Stellglieder, vorzugsweise zwischen 0,5 % und 5 % des gesamten Stellwegs. Ein solches Verstellen der ersten Stellglieder um einen vergleichsweise großen vorgegebenen Schritt erfordert dann ein Nachregeln beziehungsweise Nachstellen der zweiten Stellglieder, um den Zielwert der Netzfrequenz aufgrund der eingestellten Leistung der Turbine ideal zu erreichen. Der Aufbau löst dazu den eingangs beschriebenen sogenannten Optimalzusammenhang auf. Das erfindungsgemäße Verfahren kann daher mit minimalen Verlusten hinsichtlich des Wirkungsgrads einhergehen. Allerdings werden durch das erfindungsgemäße Verfahren weniger Stellbewegungen, zumindest der ersten Stellglieder, erzielt, welche darüber hinaus einen größeren Stellweg aufweisen. Durch die Reduzierung der Anzahl der Stellbewegungen erfolgt bereits eine deutliche Entlastung der Lagerung und der mechanischen Stellglieder, sodass hier eine weitaus höhere Lebensdauer erzielt werden kann, oder, bei der gleichen Lebensdauer, ein deutlich einfacheres und billigeres Lagerungskonzept für die ersten Stellglieder möglich ist. Außerdem werden die einzelnen Stellbewegungen größer. Dadurch wird die Schmierung beziehungsweise die Möglichkeit, einen hydrodynamischen Schmierfilm, falls Gleitlager verwendet werden, aufzubauen, deutlich verbessert. Auch dies wirkt sich bei identischem Lageraufbau positiv auf die Lebensdauer oder bei selber gewünschter Lebensdauer positiv auf die mögliche Vereinfachung des Lagers aus.

Bei mittleren Wirkungsgradeinbußen von deutlich weniger als 0,1 % ließ sich bei entsprechenden Versuchen eine Reduzierung der Stellbewegungen der ersten Stellglieder um den Faktor 10 bis 20 erzielen. In Simulationen und Messungen konnten oft auch Wirkungsgradverluste von nahezu 0 %, in Einzelfällen sogar minimale Wirkungsgradsteigerungen erfasst werden. Über den Aufbau lässt sich dadurch eine höhere Lebensdauer oder, wie bereits erwähnt, bei gleicher Lebensdauer eine deutliche Vereinfachung der Lager erzielen. Dies hat Vorteile hinsichtlich des konstruktiven Aufwands, des Bauraums, des Gewichts und der Kosten.

Bei dem erfindungsgemäßen Verfahren ist es ferner vorgesehen, dass der Ist-Wert der Netzfrequenz mit einem elektronischen Filter gefiltert wird, bevor er als Eingangsgröße für das Verstellen beziehungsweise Verfahren der ersten und zweiten Stellglieder verwendet wird. Ein solcher elektronischer Filter kann in vorteilhafter Weise eingesetzt werden, um ein Rauschen des Signals der Netzfrequenz zu minimieren. Zusammen mit der erfindungsgemäßen Idee, die ersten Stellglieder lediglich in definiert vorgegebenen Stellschritten zu verfahren, wird so die Anzahl der benötigten Stellbewegungen noch weiter minimiert, ohne dass hierdurch die Qualität der Primärregelung leidet.

In einer besonders günstigen und vorteilhaften Weiterbildung des erfindungsgemäßen Verfahrens ist es vorgesehen, dass die Stellschritte in Abhängigkeit des aktuellen Arbeitspunkts der Turbine beziehungsweise des Maschinensatzes aus Turbine und Generator vorgegeben werden. Diese Variation der Größe der Stellschritte in Abhängigkeit des Arbeitspunkts der Turbine ermöglicht eine sehr hohe Qualität der Regelung bei minimaler Anzahl an Stellbewegungen.

In einer weiteren sehr günstigen und vorteilhaften Ausgestaltung des erfindungsgemäßen Verfahrens ist es ferner vorgesehen, dass für den Fall, dass mit den ersten Stellgliedern mehr als ein Stellschritt verfahren werden müsste, die Vorgabe des definierten Stellschritts aufgegeben und die neue Position der ersten Stellglieder in einem Zug angefahren wird. Das erfindungsgemäße Verfahren sieht also für den Sonderfall, dass die zu erwartende Stellbewegung der ersten Stellglieder größer als die aktuell geltende Schrittweite ist, eine Aufhebung des erfindungsgemäßen Verfahrens vor. Bei der Kaplanturbine bedeutet dies, dass der sogenannte Optimalzusammenhang dann wieder hergestellt ist, sodass die ersten Stellglieder in einem einzigen Zug, also in einer einzigen Bewegung, die gesamte benötigte Stellweite durchfahren. Danach gilt dann das erfindungsgemäße Verfahren wieder, sofern die zu erwartende Stellbewegung kleiner oder gleich einem Stellschritt ist. Das erfindungsgemäße Verfahren hat besondere Vorteile, um eine Vielzahl von kleinen Stellschritten zu vermeiden und diese durch die Vorgabe eines definierten Werts der Stellweite entsprechend zu reduzieren. Kommt es zu größeren benötigten Verfahrwegen der ersten Stellglieder, kann es jedoch besonders effizient und vorteilhaft sein, wenn das erfindungsgemäße Verfahren ausgesetzt wird, um mehrere direkt aufeinanderfolgende Stellschritte zu verhindern und den benötigten Stellwert in einem einzigen Zug zurückzulegen.

Erfindungsgemäss ist es vorgesehen, dass der elektronische Filter als Totbandfilter mit einem gleitenden Totband ausgebildet wird. Insbesondere ein solcher Totbandfilter mit gleitendem Totband ermöglicht eine sehr effiziente Filterung des Rauschens, da das gleitende Totband dem Mittelwert des Ist-Signals gleitend folgt und um diesen herum durch das Totband das Rauschen ausfiltert. Dies ermöglicht eine besonders effiziente Minimierung der benötigten Stellbewegungen.

Erfindungsgemäss ist es vorgesehen, dass ein Gradient und eine Änderungsamplitude des Eingangssignals des Totbandfilters ermittelt wird, wobei der Totbandfilter bei einem Gradienten, welcher größer als ein vorgegebener Grenzwert ist, und einer Änderungsamplitude, welche ebenfalls größer als ein vorgegebener Grenzwert ist, vorübergehend ausgesetzt wird. Durch diesen zusätzlichen Verfahrenskniff wird eine weitere Optimierung des Totbandfilters mit gleitendem Totband erzielt. Sobald sehr starke Änderungen des Signals, welche mit einem sehr hohen Gradient des Eingangsignals einhergehen, registriert werden, wird die Totbandfilterung vorübergehend ausgesetzt, um so auf sehr starke dynamische Änderungen sehr schnell reagieren zu können. Da das gleitende Totband immer auch eine gewisse Verzögerung mit sich bringt, ist diese verfahrensmäßige Ausgestaltung sehr günstig, wenn es um die schnelle Reaktion auf beispielsweise einen scharfen Anstieg oder Abfall der Netzfrequenz geht.

In einer besonders vorteilhaften Weiterbildung hiervon ist es ferner vorgesehen, dass, solange der Totbandfilter ausgesetzt ist, dennoch eine Rauschunterdrückung durch die elektronische Filterung erfolgt. Die elektronische Filterung des optimierten Totbandfilters kann also so ausgebildet sein, dass sie auch dann, wenn der Totbandfilter ausgesetzt ist, beispielsweise durch eine Integration, ein Rauschen des Signals unterdrückt, um auch in diesen Situationen eine schnelle, zuverlässige und exakte Regelung zu gewährleisten.

Weitere vorteilhafte Ausgestaltungen des erfindungsgemäßen Verfahrens ergeben sich ferner aus den restlichen abhängigen Ansprüchen. Sie werden außerdem aus dem Ausführungsbeispiel deutlich, welches nachfolgend unter Bezugnahme auf die Figuren näher beschrieben ist.

Dabei zeigen:
- Figur 1: eine Prinzipdarstellung eines für die Erfindung relevanten Ausschnitts aus einem Wasserkraftwerk; und
- Figur 2: einen gemessenen Verlauf einer Netzfrequenz sowie eines daraus generierten gefilterten Ist-Werts als Regeleingangsgröße.

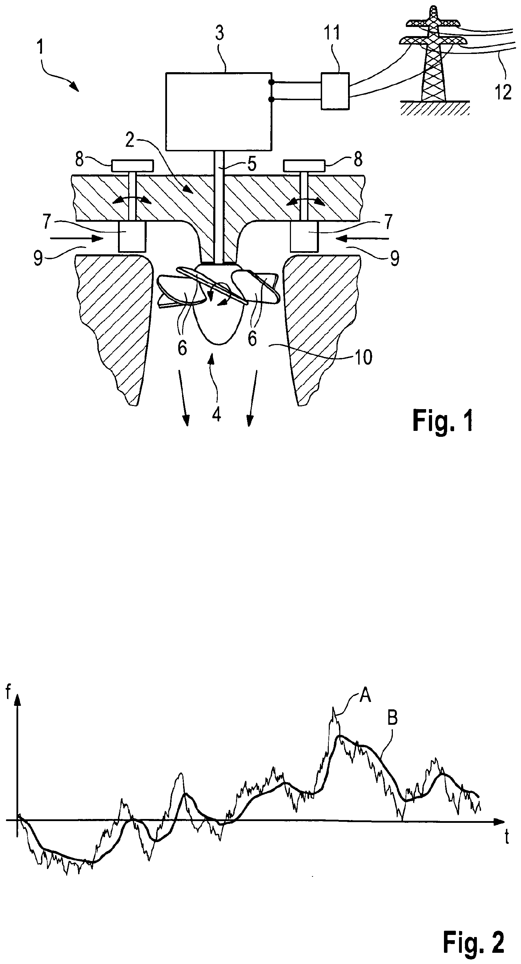

In der Darstellung der Figur 1 ist ein für die Erfindung relevanter Ausschnitt aus einem Wasserkraftwerk 1, welches in seiner Gesamtheit nicht dargestellt ist, zu erkennen. Den Kern des dargestellten Ausschnitts bildet ein Maschinensatz 2, welcher einen Generator 3 sowie eine Kaplanturbine 4 umfasst. Diese sind über eine gemeinsame Welle 5, welche in dem dargestellten Ausführungsbeispiel parallel zur Schwerkraft ausgebildet ist, verbunden. Die Kaplanturbine 4 selbst weist sogenannte Turbinenschaufeln 6, welche auch als Flügel bezeichnet werden, auf. Diese Turbinenschaufeln 6 sind, wie es am Beispiel einer der Turbinenschaufeln 6 durch einen Doppelpfeil angedeutet ist, verstellbar ausgebildet. Sie bilden die ersten Stellglieder der Kaplanturbine 4, welche insgesamt als doppeltgeregelte Turbine 4 ausgebildet ist. Die zweiten Stellglieder werden durch Leitschaufeln 7 in einem Leitapparat ausgebildet, welcher die Zufuhr des Wassers zu der Kaplanturbine 4 beeinflusst. Über prinzipmäßig angedeutete Aktuatoren 8 sind diese Leitschaufeln 7 verstellbar. Sie beeinflussen so die Menge an Wasser, welche durch das sogenannte Druckrohr von einem Oberwasser des Wasserkraftwerks 1 über die Spirale 9 zu der Kaplanturbine 4 strömt. Nachdem die Turbine 4 passiert ist, strömt das Wasser über ein sogenanntes Saugrohr 10 in das Unterwasser ab.

Durch das Gefälle zwischen dem Oberwasser und dem Unterwasser kommt es zu einer Druckdifferenz in dem Wasser, welches die Kaplanturbine 4 antreibt. Über die gemeinsame Welle 5 wird dann der Generator 3 angetrieben und stellt elektrische Leistung bereit. Über eine angedeutete Elektronik 11 gelangt diese elektrische Leistung in ein elektrisches Versorgungsnetz 12, welches in der Darstellung der Figur 1 anhand eines Masten einer Überlandleitung beispielhaft angedeutet ist.

Um im Bereich des elektrischen Versorgungsnetzes 12 nun für eine ausreichende Netzstabilität zu sorgen ist es wichtig, dass die Netzfrequenz in dem elektrischen Versorgungsnetz 12 in vergleichsweise engen Grenzen konstant gehalten wird. Die typische Netzfrequenz in Europa liegt dabei bei ca. 50 Hz, in den Vereinigten Staaten bei ca. 60 Hz. Das Wasserkraftwerk 1 unterstützt die Konstanz der Netzfrequenz durch die sogenannte Primärregelung. Dies bedeutet, dass die Leistungsabgabe des Generators 3 in das elektrische Netz 12 anhand der Netzfrequenz nachgeführt wird. Hierfür erfolgt eine Ansteuerung der doppeltgeregelten Turbine 4 beziehungsweise ihrer beiden Stellglieder, nämlich der Turbinenschaufeln 6 als erste Stellglieder und der Turbinenschaufeln 7 als zweite Stellglieder.

Bei der Primärregelung gemäß dem Stand der Technik ist es nun so, dass zur Optimierung des Wirkungsgrads der doppeltgeregelten Turbine 4 zwischen den Stellbewegungen der Leitschaufeln 7 als zweite Stellglieder und der Turbinenschaufeln 6 als erste Stellglieder der sogenannte Optimalzusammenhang gilt. Dies bedeutet, dass die Stellbewegungen immer in einem optimalen Zusammenhang zueinander ausgeführt werden. Dadurch lässt sich der Wirkungsgrad der Turbine 4 optimieren. Die Ansteuerung der doppeltgeregelten Turbine 4 durch die Netzfrequenz führt zu einer sehr hohen Anzahl von Stellbewegungen, da in der typischen Netzfrequenz sehr schnelle Schwankungen auftreten und darüber hinaus ein Rauschen auftreten kann. Am Beispiel der hier dargestellten Kaplanturbine 4 wurden bei einem aus der Praxis aufgezeichneten Frequenzverlauf f über der Zeit t, wie er in der Darstellung der Figur 2 anhand der mit A bezeichneten Linie zu erkennen ist, innerhalb einer Betriebsstunde ca. 2500 bis 3000 Änderungen der Ansteuerung der Flügelschaufeln 6 beziehungsweise der Leitschaufeln 7 registriert. Die Lager der Flügelschaufeln 6 und der Leitschaufeln 7 müssen also auf eine vergleichsweise hohe Anzahl von Stellbewegungen, welche teilweise nur sehr geringe Verfahrwege aufweisen, ausgelegt sein. Dies macht die Lagerung vergleichsweise groß, aufwändig und teuer.

Das erfindungsgemäße Verfahren setzt nun bei der Anzahl der erforderlichen Stellbewegungen an. Ziel ist es, diese zu reduzieren, um so mit einfacheren und kostengünstigeren Lagern eine vergleichbare Lebensdauer beziehungsweise mit vergleichbaren Lagern eine höhere Lebensdauer zu erzielen. Dies wird dadurch erreicht, dass eine Verstellung der Turbinenschaufeln 6 als erste Stellglieder nur noch mit definiert vorgegebenen Stellschritten erfolgt. Über die Leitschaufeln 7 lässt sich dann die Qualität der Regelung aufrechterhalten. Hier ist die Lagerung weniger problematisch, da sie im stationären Leitapparat einfacher und effizienter ausgeführt werden kann, als im Bereich der sich drehenden Kaplanturbine 4. Die vorgegebenen Stellschritte der ersten Stellglieder werden eher groß vorgegeben, vorzugsweise in der Größenordnung von 0,5 % - 5 % des Verstellwegs. Dies bedeutet also, dass jeder einzelne Schritt wenigstens 0,5 und bis zu 5 % des gesamten möglichen Verstellwegs zwischen dem einen Anschlag und dem anderen Anschlag der Turbinenschaufeln 6 ausmacht. Durch diese Vorgabe und den Zwang, die ersten Stellglieder lediglich in Schritten zu verfahren, wird die Anzahl der benötigten Stellbewegungen der Turbinenschaufeln 6 reduziert. Die Leitschaufeln 7 des Leitapparats regeln dann auf den Zielwert der Netzfrequenz nach.

Die Anzahl der Stellbewegungen, insbesondere der Turbinenschaufeln 6, wird also reduziert. Gleichzeitig wird der Verfahrweg innerhalb jeder einzelnen Stellbewegung erhöht. Dadurch ergibt sich die Möglichkeit aufgrund des höheren Verfahrwegs, einen besseren hydrodynamischen Schmierfilm in den typischerweise als Gleitlagern ausgeführten Lagern auszubilden. Dies trägt neben der Reduzierung der Anzahl an Stellbewegungen entscheidend zur Verbesserung der Lagerung bei. Hierdurch können mit vergleichbar ausgestalteten Lagern sehr viel höhere Standzeiten erzielt werden beziehungsweise die Lager können deutlich einfacher, und dadurch kostengünstiger und bauraumsparender, ausgebildet werden.

Zusätzlich ist es vorgesehen, dass der Ist-Wert der Netzfrequenz über einen elektronischen Filter gefiltert wird, um ein Rauschen zu unterdrücken und auch hierdurch auf eine Minimierung der benötigten Stellbewegungen im Bereich der Kaplanturbine 4 einzuwirken. Hierfür lässt sich beispielsweise ein einfacher PT1-Filter einsetzen, welcher lediglich das Rauschen in dem Ist-Signal der Netzfrequenz reduziert. Erfindungsgemäss lässt sich jedoch ein Totbandfilter einsetzen, welcher entsprechende Frequenzen, welche zum Beispiel als Oberschwingungen in dem Frequenzsignal auftreten, gänzlich ausfiltert. Erfindungsgemäss ist ein Totbandfilter, welcher mit einem sogenannten gleitenden Totband arbeitet. Dies bedeutet, dass der Totbandfilter gleitend einem Mittelwert des Eingangssignals folgt. Das einzige Problem bei einem solchen gleitenden Totbandfilter tritt dann auf, wenn ein scharfer Anstieg oder Abfall des Eingangssignals auftritt. Für diese Situationen ist es daher in einem optimierten Totbandfilter mit gleitendem Totband vorgesehen, dass der Totbandfilter vorübergehend abgeschaltet wird, wenn es zu einem scharfen und großen Anstieg oder Abfall des Eingangssignals kommt. Hierfür wird der Gradient und die Änderungsamplitude des Eingangssignals beobachtet. Ändern sich diese um mehr als einen vorgegebenen Grenzwert, dann wird der Totbandfilter vorübergehend ausgesetzt und erst nach dem Absinken des Gradienten und der Änderungsamplitude wieder eingeschaltet. Um auch in dieser Situation mit ausgesetztem Totbandfilter eine Rauschunterdrückung zu erhalten, kann der elektronische Filter so ausgestaltet sein, dass diese Rauschunterdrückung beispielsweise durch ein PT1-Filterglied oder insbesondere durch eine Integration bei abgeschaltetem Totbandfilter erfolgt. Ein solcher Totbandfilter mit gleitendem Totband und einem Funktionsblock zur Abschaltung des Totbands bei schnellen und großen Änderungen des Eingangssignals wird nachfolgend als optimierter Totbandfilter bezeichnet.

Setzt man einen solchen optimierten Totbandfilter ein, so erhält man aus dem Ist-Wert A der Netzfrequenz den durch die Linie B dargestellten gefilterten Wert. Der optimierte Totbandfilter sorgt dafür, dass das Ausgangssignal, also der gefilterte Wert B, dem Eingangssignal, also dem Ist-Wert A der Netzfrequenz, schneller und mit deutlich weniger Dämpfung, und damit sehr viel präziser, folgt. Dieser gefilterte Wert B kann dann als Eingangsgröße B für die Ansteuerung der Turbinenschaufeln 6 und der Leitschaufeln 7 genutzt werden. Hierdurch wird eine optimierte Ansteuerung der beiden Stellglieder der Kaplanturbine 4 erzielt. Greift man das oben bereits beschriebene Beispiel auf, so kann bereits der sehr einfache PT1-Filter, welcher lediglich das Rauschen des Signals unterdrückt, zusammen mit der erfindungsgemäßen Idee, die Turbinenschaufeln 6 in vorgegebenen Stellschritten zu verstellen, eine Reduzierung der Anzahl der Stellbewegungen bei den Turbinenschaufeln 6 um einen Faktor von bis zu 20, zum Beispiel von 3000 auf rund 150 Stellbewegungen erzielen. Die Stellbewegungen der Leitschaufeln 7 werden dabei in etwa um den Faktor 3 von ca. 2500 auf ca. 800 Stellbewegungen reduziert. Verwendet man dagegen den optimierten Totbandfilter, so ist eine weitere geringe Reduktion der Stellbewegungen der Turbinenschaufeln 6 möglich, die Stellbewegungen der Leitschaufeln 7 lassen sich hierdurch jedoch nochmals um den Faktor 1,5 - 2,5 reduzieren. Insgesamt wird also durch das beschriebene Verfahren in Kombination mit dem optimierten Totbandfilter eine Reduktion der Stellbewegungen der Turbinenschaufeln 6 um mehr als den Faktor 20 und eine Reduktion der Stellbewegungen der Leitschaufeln 7 auf weniger als 1/6 der ursprünglich benötigten Stellbewegungen erzielt. Die Primärregelung erleidet dabei keine relevante Qualitätseinbuße. Da jedoch der Optimalzusammenhang zwischen den Stellbewegungen der Leitschaufeln 7 und der Turbinenschaufeln 6 zur Anwendung des erfindungsgemäßen Verfahrens aufgehoben werden muss, kommt es hierdurch zu einer minimalen Einbuße beim durchschnittlichen Wirkungsgrad, welche typischerweise jedoch deutlich unter 0,1 % liegt. Aufgrund der verlängerten Lebensdauer beziehungsweise der Reduktion des Aufwands bei der Lagerung und den damit verbundenen Einsparungen überwiegt jedoch typischerweise dieser Vorteil.

Kommt es nun bei der Anwendung des erfindungsgemäßen Verfahrens zu einem Sprung in der Ist-Frequenz, so könne es prinzipiell notwendig sein, je nach vorgegebener Größe des Stellschritts, dass mehrere Stellschritte unmittelbar nacheinander durchfahren werden müssten. Für diesen Fall, dass eine Bewegung zu erwarten ist, welche einen Verfahrweg von mehr als einem Stellschritt aufweist, kann das erfindungsgemäße Verfahren kurzzeitig ausgesetzt werden. Im Beispiel der Kaplanturbine 4 wird dann vorübergehend der Optimalzusammenhang wieder hergestellt und Leitschaufeln 7 und Turbinenschaufeln 6 fahren gemäß diesem Zusammenhang auf den von der Regelung vorgegebenen Endpunkt. Dann beginnt das Verfahren zur Reduktion der Stellbewegungen wieder zu arbeiten. Dadurch wird verhindert, dass bei größeren Stellbewegungen diese in mehreren Einzelschritten durchfahren werden. Dies wäre hinsichtlich der Lagerung, und hier insbesondere hinsichtlich des hydrodynamischen Schmierfilms, eher ein Nachteil als ein Vorteil, da die Bewegung, welche ansonsten in einem Zug ausgeführt werden könnte, hierdurch durchbrochen werden müsste. Die Aussetzung des beschriebenen Verfahrens für diese vergleichsweise selten auftretenden Spezialfälle ist also sinnvoll und kann die Entlastung der Lager weiter unterstützen.

Ein solcher Totbandfilter mit gleitendem Totband und einem Funktionsblock zur Abschaltung des Totbands bei schnellen und großen Änderungen des Eingangssignals wird nachfolgend als optimierter Totbandfilter bezeichnet.

Setzt man einen solchen optimierten Totbandfilter ein, so erhält man aus dem Ist-Wert A der Netzfrequenz den durch die Linie B dargestellten gefilterten Wert. Der optimierte Totbandfilter sorgt dafür, dass das Ausgangssignal, also der gefilterte Wert B, dem Eingangssignal, also dem Ist-Wert A der Netzfrequenz, schneller und mit deutlich weniger Dämpfung, und damit sehr viel präziser, folgt. Dieser gefilterte Wert B kann dann als Eingangsgröße B für die Ansteuerung der Turbinenschaufeln 6 und der Leitschaufeln 7 genutzt werden. Hierdurch wird eine optimierte Ansteuerung der beiden Stellglieder der Kaplanturbine 4 erzielt. Greift man das oben bereits beschriebene Beispiel auf, so kann bereits der sehr einfache PT1-Filter, welcher lediglich das Rauschen des Signals unterdrückt, zusammen mit der erfindungsgemäßen Idee, die Turbinenschaufeln 6 in vorgegebenen Stellschritten zu verstellen, eine Reduzierung der Anzahl der Stellbewegungen bei den Turbinenschaufeln 6 um einen Faktor von bis zu 20, zum Beispiel von 3000 auf rund 150 Stellbewegungen erzielen. Die Stellbewegungen der Leitschaufeln 7 werden dabei in etwa um den Faktor 3 von ca. 2500 auf ca. 800 Stellbewegungen reduziert. Verwendet man dagegen den optimierten Totbandfilter, so ist eine weitere geringe Reduktion der Stellbewegungen der Turbinenschaufeln 6 möglich, die Stellbewegungen der Leitschaufeln 7 lassen sich hierdurch jedoch nochmals um den Faktor 1,5 - 2,5 reduzieren. Insgesamt wird also durch das beschriebene Verfahren in Kombination mit dem optimierten Totbandfilter eine Reduktion der Stellbewegungen der Turbinenschaufeln 6 um mehr als den Faktor 20 und eine Reduktion der Stellbewegungen der Leitschaufeln 7 auf weniger als 1/6 der ursprünglich benötigten Stellbewegungen erzielt. Die Primärregelung erleidet dabei keine relevante Qualitätseinbuße. Da jedoch der Optimalzusammenhang zwischen den Stellbewegungen der Leitschaufeln 7 und der Turbinenschaufeln 6 zur Anwendung des erfindungsgemäßen Verfahrens aufgehoben werden muss, kommt es hierdurch zu einer minimalen Einbuße beim durchschnittlichen Wirkungsgrad, welche typischerweise jedoch deutlich unter 0,1 % liegt. Aufgrund der verlängerten Lebensdauer beziehungsweise der Reduktion des Aufwands bei der Lagerung und den damit verbundenen Einsparungen überwiegt jedoch typischerweise dieser Vorteil.

Kommt es nun bei der Anwendung des erfindungsgemäßen Verfahrens zu einem Sprung in der Ist-Frequenz, so könne es prinzipiell notwendig sein, je nach vorgegebener Größe des Stellschritts, dass mehrere Stellschritte unmittelbar nacheinander durchfahren werden müssten. Für diesen Fall, dass eine Bewegung zu erwarten ist, welche einen Verfahrweg von mehr als einem Stellschritt aufweist, kann das erfindungsgemäße Verfahren kurzzeitig ausgesetzt werden. Im Beispiel der Kaplanturbine 4 wird dann vorübergehend der Optimalzusammenhang wieder hergestellt und Leitschaufeln 7 und Turbinenschaufeln 6 fahren gemäß diesem Zusammenhang auf den von der Regelung vorgegebenen Endpunkt. Dann beginnt das Verfahren zur Reduktion der Stellbewegungen wieder zu arbeiten. Dadurch wird verhindert, dass bei größeren Stellbewegungen diese in mehreren Einzelschritten durchfahren werden. Dies wäre hinsichtlich der Lagerung, und hier insbesondere hinsichtlich des hydrodynamischen Schmierfilms, eher ein Nachteil als ein Vorteil, da die Bewegung, welche ansonsten in einem Zug ausgeführt werden könnte, hierdurch durchbrochen werden müsste. Die Aussetzung des beschriebenen Verfahrens für diese vergleichsweise selten auftretenden Spezialfälle ist also sinnvoll und kann die Entlastung der Lager weiter unterstützen.

## Patentansprüche

1. Verfahren zur Primärregelung eines Wasserkraftwerks (1) mit
1.1 einer doppelt geregelten Turbine (4),
1.2 wenigstens einem ersten Stellglied (6),
1.3 wenigstens einem zweiten Stellglied (7), wobei
1.4 die ersten und zweiten Stellglieder (6, 7) in Abhängigkeit eines Ist-Werts (A) einer Netzfrequenz eines die erzeugte elektrische Leistung aufnehmenden elektrischen Netzes (12) zur Beeinflussung der Turbinenleistung nachgestellt werden, um einen Zielwert der Netzfrequenz zu erreichen, und wobei
1.5 als Turbine eine Kaplanturbine (4) mit Laufradschaufeln (6) als erste Stellglieder und Leitschaufeln (7) eines Leitapparats als zweite Stellglieder verwendet wird, wobei 1.6 die ersten Stellglieder (6) nur in definiert vorgegeben Stellschritten verfahren werden, und danach
1.7 eine Regelung auf den Zielwert der Netzfrequenz durch Nachführen der zweiten Stellglieder (7) erfolgt, wobei
1.8 der Ist-Wert (A) der Netzfrequenz mit einem elektronischen Filter gefiltert wird, bevor er als Eingangsgröße (B) für das Verstellen der ersten und zweiten Stellglieder verwendet wird, **dadurch gekennzeichnet, dass** der elektronische Filter als Totbandfilter mit einem gleitenden Totband ausgebildet wird, und wobei ein Gradient und eine Änderungsamplitude eines Eingangssignals des Totbandfilters ermittelt wird, wobei der Totbandfilter bei einem Gradienten, welcher größer als ein vorgegebener Grenzwert ist, und einer Änderungsamplitude, welche größer als ein vorgegebener Grenzwert ist, vorübergehend ausgesetzt wird.

2. Verfahren nach Anspruch 1, **dadurch gekennzeichnet, dass** die Stellschritte der ersten Stellglieder (6) mit mindestens 0,5 %, vorzugsweise mit einem Wert zwischen 0,5 % und 5 %, des Gesamtstellwegs der ersten Stellglieder (6) vorgegeben werden.

3. Verfahren nach Anspruch 1 oder 2, **dadurch gekennzeichnet, dass** die Stellschritte in Abhängigkeit des aktuellen Arbeitspunkts der Turbine (4) vorgegeben werden.

4. Verfahren nach Anspruch 1, 2, oder 3, **dadurch gekennzeichnet, dass** für den Fall, das mit den ersten Stellgliedern (6) mehr als ein Stellschritt verfahren werden müsste, die Vorgabe des definierten Stellschritts aufgehoben und die neue Position der ersten Stellglieder (6) in einem Zug angefahren wird.

5. Verfahren nach Anspruch 1, 2, 3 oder 4, **dadurch gekennzeichnet, dass,** solange der Totbandfilter ausgesetzt ist, weiterhin eine Rauschunterdrückung durch den elektronischen Filter erfolgt.

6. Verfahren nach einem der Ansprüche 1 bis 5, **dadurch gekennzeichnet, dass** der Optimalzusammenhang zwischen Laufradschaufeln (6) und Leitschaufeln (7) aufgehoben wird, solange die ersten Stellglieder (6) in vorgegebenen Stellschritten verfahren werden.

## Claims

1. Method for primary regulation of a hydroelectric power plant (1) having
1.1 a double-regulated turbine (4),
1.2 at least one first actuating element (6),
1.3 at least one second actuating element (7), wherein
1.4 the first and second actuating elements (6, 7) are adjusted on the basis of an actual value (A) of a system frequency of an electrical system (12) consuming the generated electric power, in order to influence the turbine power in order to achieve a target value for the system frequency, and wherein
1.5 the turbine used is a Kaplan turbine (4) having runner blades (6) as first actuating elements and guide vanes (7) of a guide unit as second actuating elements, wherein
1.6 the first actuating elements (6) are moved only in actuating steps stipulated in a defined manner, and then
1.7 regulation to achieve the target value for the system frequency is accomplished by adjusting the second actuating elements (7), wherein
1.8 the actual value (A) of the system frequency is filtered using an electronic filter before being used as an input variable (B) for altering the first and second actuating elements, **characterized in that** the electronic filter is in the form of a deadband filter with a floating deadband, and wherein a gradient and a change amplitude of an input signal of the deadband filter are ascertained, the deadband filter being temporarily stopped for a gradient that is greater than a stipulated limit value and a change amplitude that is greater than a stipulated limit value.

2. Method according to Claim 1, **characterized in that** the actuating steps of the first actuating elements (6) are stipulated at at least 0.5%, preferably at a value between 0.5% and 5%, of the total actuating movement of the first actuating elements (6).

3. Method according to Claim 1 or 2, **characterized in that** the actuating steps are stipulated on the basis of the present operating point of the turbine (4).

4. Method according to Claim 1, 2 or 3, **characterized in that** if the first actuating elements (6) were to need to be moved more than one actuating step, the stipulation of the defined actuating step is removed and the new position for the first actuating elements (6) is approached in one go.

5. Method according to Claim 1, 2, 3 or 4, **characterized in that** while the deadband filter is stopped there continues to be noise rejection provided by the electronic filter.

6. Method according to one of Claims 1 to 5, **characterized in that** the optimum relationship between runner blades (6) and guide vanes (7) is removed while the first actuating elements (6) are moved in stipulated actuating steps.

## Revendications

1. Procédé de régulation primaire d'une centrale hydroélectrique (1) comprenant
1.1 une turbine à double régulation (4),
1.2 au moins un premier élément de réglage (6),
1.3 au moins un deuxième élément de réglage (7),
1.4 les premier et deuxième éléments de réglage (6, 7) étant réajustés en fonction d'une valeur réelle (A) d'une fréquence de réseau d'un réseau électrique (12), qui consomme l'énergie électrique générée, pour influer sur la puissance de la turbine afin d'atteindre une valeur cible de la fréquence de réseau, et
1.5 la turbine utilisée étant une turbine Kaplan (4) munie d'aubes de rotor (6) comme premiers éléments de réglage et d'aubes de guidage (7) d'un diffuseur comme deuxièmes éléments de réglage,
1.6 les premiers éléments de réglage (6) étant déplacés uniquement suivant des étapes de réglage définies et prédéterminées, puis
1.7 une régulation à la valeur cible de la fréquence de réseau étant effectuée par réajustement des deuxièmes éléments de réglage (7),
1.8 la valeur réelle (A) de la fréquence de réseau étant filtrée avec un filtre électronique avant d'être utilisée comme grandeur d'entrée (B) pour le réglage des premier et deuxième éléments de réglage, **caractérisé en ce que** le filtre électronique est conçu comme un filtre à bande morte comportant une bande morte glissante et un gradient et une amplitude de variation d'un signal d'entrée du filtre à bande morte étant déterminés, le filtre à bande morte étant temporairement arrêté pour un gradient qui est supérieur à une valeur limite prédéterminée et une amplitude de variation qui est supérieure à une valeur limite prédéterminée.

2. Procédé selon la revendication 1, **caractérisé en ce que** les étapes de réglage des premiers éléments de réglage (6) sont prédéterminées avec au moins 0,5 %, de préférence avec une valeur comprise entre 0,5 % et 5 %, de la course totale des premiers éléments de réglage (6) .

3. Procédé selon la revendication 1 ou 2, **caractérisé en ce que** les étapes de réglage sont spécifiées en fonction du point de fonctionnement actuel de la turbine (4).

4. Procédé selon la revendication 1, 2 ou 3, **caractérisé en ce que**, dans le cas où plus d'une étape de réglage devrait être réalisées avec les premiers éléments de réglage (6), la spécification de l'étape de réglage définie est annulée et la nouvelle position des premiers éléments de réglage (6) est approchée en une passe.

5. Procédé selon la revendication 1, 2, 3 ou 4, **caractérisé en ce que** le filtre électronique effectue une suppression de bruit tant que le filtre à bande morte est arrêté.

6. Procédé selon l'une des revendications 1 à 5, **caractérisé en ce que** la relation optimale entre les aubes de rotor (6) et les aubes de guidage (7) est supprimée tant que les premiers éléments de réglage (6) sont mis en œuvre suivant des étapes de réglage prédéterminées.
